# EUROPÄISCHE PATENTSCHRIFT

(11) **EP 0 423 389 B1**
(45) Veröffentlichungstag und Bekanntmachung des Hinweises auf die Patenterteilung: **11.09.1996**
(21) Anmeldenummer: 89119388.0
(22) Anmeldetag: 19.10.1989
(51) Int. Cl.: B22D 11/16, B23K 7/00

(54) **Stranggiessanlage mit Stummel-Brennschneidrollgang**
Flame cutting machine with stub support rollers for continuous casting
Machine de découpage au chalumeau avec moignons cyclindriques de support, dans le cadre de la coulée continue

(43) Veröffentlichungstag der Anmeldung: 24.04.1991
(73) Patentinhaber: FA. HORST K. LOTZ, D-65719 Hofheim (DE)
(72) Erfinder: Lotz, Horst K., D-6238 Hofheim-Wallau (DE); Manning, Glyndwr, Burton-on-Trent Staffordshire (GB)

(56) Entgegenhaltungen:
- EP-A- 0 004 384
- EP-A- 0 321 685
- DE-B- 2 708 140
- FR-A- 2 462 219

## Beschreibung

Die Erfindung betrifft eine Stranggießanlage für Stahl nach dem oberbegriff des Anspruchs 1.

Beim Brennschneiden zum Unterteilen von laufenden Strängen in Stahl-Stranggießanlagen stellt die Unterstützung des Stranges und der davon abgeschnittenen Brammen im Brennschneidbereich eine bis heute nur unvollkommen gelöste Aufgabe dar. Die nachfolgend beschriebene Erfindung einer neuartigen Strangunterstützung im Brennschneidbereich mit ihren verschiedenen Ausführungen ist, wenn vielleicht auch anfänglich etwas aufwendiger, eine wirtschaftliche, betriebssichere und vielseitige Antwort auf die Frage nach einem einfachen, störfreien, pflegeleichten, wartungsarmen und rauchgasfreien Betrieb der Strangunterstützung im Brennschneidbereich.
Besonders werden die Schwierigkeiten der nachfolgend aufgezählten, bisher als wesentlich bekannten Ausführungen von Strangunterstützungen unter anderem vermieden:

Absenkbare Rollen im Rollgang:
- Verschmutzen mit Schlacke
- gelegentliches Anschneiden bei Betriebsstörungen
- hydraulische Hub- und Senkantriebe, Kosten und Betriebsstörungen
- Synchronsteuerung von Rollensenken und Brennschneidverlauf
- Graunulierung der Schlacke mit Wasser im Rollenbereich erforderlich
- zeitweise große Unterstützungslücken, daher begrenzte Brammenmindestlängen
- Schwierigkeiten beim Abtransport kurzer Strangreststücke
- schlechte Rauchgasabsaugung da schwierige Einfassung des Rauchgasbereiches und schwierige Anordnung der Absaugkanäle, vor allem bei Mehrstranganlagen
- schlechte Sicht auf die Ausschneidseite

Walzen- oder Scheibenrollgang mit Brennschneidunterbrechung über den Rollen bzw. Rollenachsen:
- Verschmutzen mit Schlacke
- gelegentliches Anschneiden bei Betriebsstörungen
- eventuell Granulierung in Rollennähe nötig
- Synchronsteuerung für Schneidpausen über den Rollen
- Verlängerung der Brennschneidmitlaufwege entsprechend der überlaufenden Rollenbreiten ohne Schneiden
- entsprechende Verlängerung der kürzestens möglichen Stücklängen
- wiederholter Schneidstart und Schneidstop mit Verschlechterung der Schnittfläche und Gefahr einer dadurch ausgelösten Betriebsstörung
- schlechte Rauchgasabsaugung wie oben beschrieben, insbesondere bei verschiedenen Strangbreiten
- schlechte Sicht auf die Ausschneidseite

Rollentisch mit und ohne Schneidunterbrechung beim beschleunigten Durchlauf einer Rolle unter den Schneidbrennern:
- statt Absenkhydraulik starke Verfahrantriebe und Laufbahnen
- Veränderung der Unterstützungslücken am Einlauf und Auslauf des Rollentisches
- es gelten alle anderen Nachteile der vorgenannten Unterstützungsarten, wenngleich Schlackeanfall bzw. Schneidzeit- oder Mitlaufwegverlängerung durch Verfahren des Rollentisches günstiger gestaltet werden.

Bei allen vorstehend erwähnten Arten von Strangunterstützungen wurde bisher versucht durch eine Brennerwegsteuerung in Abhängigkeit von der Gießbewegung des Stranges, wie in der EPA-0004 384 beansprucht und erläutert, eine Vielzahl von betrieblichen Schwierigkeiten zu vermeiden. Dazu gehören z. B. das Verschmutzen mit Schlacke und der Abtransport kurzer Reststücke. Die Erfindung stellt sich zur Aufgabe diese Schwierigkeiten zu vermeiden, Diese Aufgabe wird durch die Merkmale des Anspruchs 1 gelöst. Die nachstehend beschriebene Erfindung stellt eine neue Art der Strangunterstützung selbst dar und geht von den üblichen Voraussetzungen einer Brennerbewegung, den üblichen Gießgeschwindigkeiten und den üblichen Schneidgeschwindigkeiten aus. Eine Brennerwegsteuerung mit Verzögerungen oder Beschleunigungen des Brennschneidvorganges wäre möglich, kann sich aber auf eine Unterbrechung des Schneidvorganges für einen Notfall beschränken.

Wenngleich die kurz als Stummelrollgang zu bezeichnende Erfindung je nach Aufwand, Anlage und Gießprogramm wie beansprucht verschiedene Ausführungsmöglichkeiten besitzt, soll nachstehend die vielleicht übersichtlichste und vielseitigste Ausführung beschrieben werden.

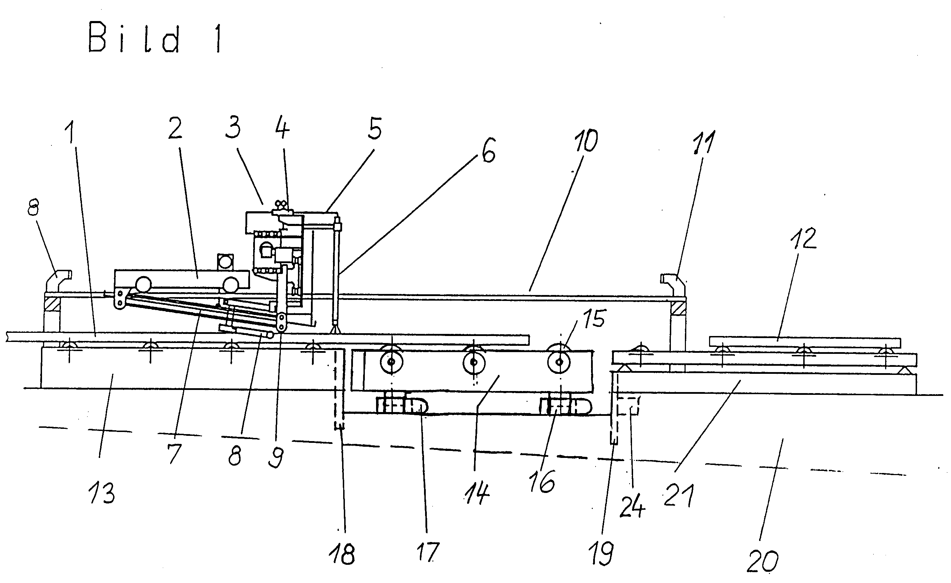

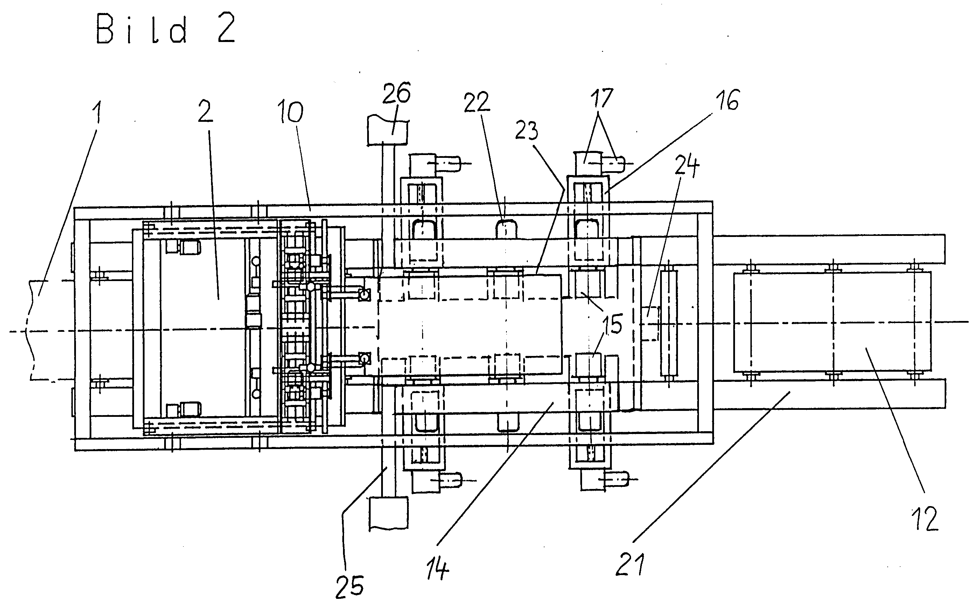

Wie in Bild 1 und 2 dargestellt, läuft ein Strang 1 unter einer Brennschneidmaschine 2 mit Gasversorgung 3, Gassteuerung 4 und Gasleitungen 5 zu den Schneidbrennern 6. Durch einen Hebel 7 wird eine Aufsetzkufe 9 mit an ihr befestigter Brennerbrücke 10 zur Erzeugung eines Synchronlaufs von Brennschneidmaschine 2 auf der Laufbahn 10 bis höchstens zu dem Puffer 11 auf den Strang 1, der sich zum Beginn eines Schneidablaufes auf dem Rollgang 13 befindet, abgesenkt. Die Kantentaster 8 ertasten die Stranglage und -breite und lösen den Schneidvorgang über dem aus Rahmen 14, Stummelrollen 15 und Verschiebesystem 16 mit Verschiebeantrieb 17 bestehenden Stummelrollgang 22 aus. Die dadurch abgeschnittene Bramme 12 wird vom Ablaufrollgang 21 aufgenommen und weitertransportiert. Die vordere Abschottung 18 und die hintere Abschottung 19 sind Trennwände aus beispielsweise Blech, die den im Brennschneidbereich liegenden Teil des Sinterkanals 20 außer für den Fluß von Wasser, Sinter und Schlacke räumlich begrenzen. An der hinteren Abschottung 19 ist eine durch Metallgitter und Glas verschlossene Öffnung, durch die eine gegen Wärme und Verschmutzung geschützte Kamera 24 in den Brennschneidbereich unter den Strang 1 blickt und den einwandfreien Schneidablauf ungestört auf Schlacken- und Funkenaustritt aus der Schneidfuge überwachen läßt.

Die Stummelrollen 15 mit Führungskragen durchdringen mit ihren Achsen die Rahmen 14, die mit Schutzhülsen und robusten Lagern ausgestattet sind. Auf der jeweiligen Außenseite der Rahmen 14 treiben Stummelrollenantriebe 22 die Stummelrollen 15 mit Gieß- oder Ablaufgeschwindigkeit an. Natürlich können einige oder alle Stummelrollen 15 auch ohne Antrieb sein. Die Rahmen 14 sitzen auf jeweils zwei Verschiebesystemen 16, die aus Schlitten, Schlittenführung und Verschiebespindel bestehen und mit Verschiebeantrieben 17, aus Getriebe und Gleichstrommotor bestehend, ausgestattet sind. Damit werden die Rahmen 14 mit ihren Stummelrollen 15 vor Gießbeginn auf Strangbreite eingestellt. Die Abstände zwischen dem Rollgang 13 und den Stummelrollen 15 und die Unterstützungsbreite der Stummelrollen 15 unter dem Strang 1 sind so gewählt, daß nicht nur der Strang 1 ausreichend unterstützt ist, sondern daß auch die synchron mit dem Strang 1 in Längsrichtung und gleichzeitig quer dazu schneidenden Brenner 6 an den Stummelrollen 15 vorbei kommen ohne sie anzuschneiden oder mit Schlacke zu bespritzen.

Bei kleineren Unterschieden zwischen den verschiedenen Strangbreiten oder bei anderen Bedingungen, bespielsweise engen Einbaumöglichkeiten, sind die Stummelrollen 15 bei fest angeordneten Rahmen 14 in diesem Rahmen 14 verschiebbar angeordnet.

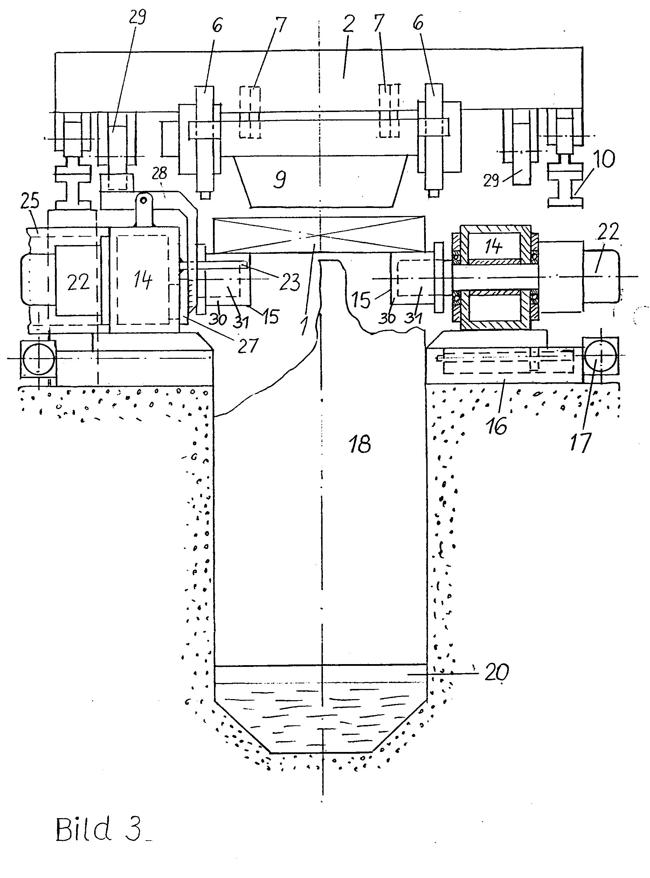

Die Stummelrollen 15 können mit Kragen ausgeführt sein oder die Rahmen 14 mit Abweisblechen, um seitlich verlaufende Stränge 1 oder schräg ablaufende Brammen 12 zu führen. Wie in Bild 2 und noch deutlicher in Bild 3 zu sehen, können die Rahmen 14 als Hohlkasten ausgeführt sein, um als Hauptteil einer Rauchgasabsaugung unter dem Strang 1 im Brennschneidbereich zu dienen. Auf der Seite des Stranges 1 besitzen die Rahmen 14 zwischen den Stummelrollen 15 Abdeckplatten 23, die mit diesen unter dem Strang 1 liegen und ein Entweichen der Rauchgase nach oben an den Seiten des Stranges 1 vorbei behindern oder verhindern. Unter diesen Abdeckplatten 23 haben die Rahmen 14 Absaugöffnungen, die aus Gründen der Ventilatorgröße mit Klappen 27 abgedeckt sind, die ihrerseits mittels durch die Abdeckplatten 23 hindurchgehenden Klappenhebel 28 im Bereich des jeweiligen Brennschneidbereiches zum Absaugen geöffnet werden. Dieses Öffnen wird beispielsweise von der Brennschneidmaschine 2 ausgelöst bzw. mit ihrem Niederdrücker 29 bewirkt. An einem Ende des Rahmens 14 befindet sich ein rechtwinklig abgehender Absaugschnorchel 25 der in eine Absaugleitung 26 verschiebbar abgedichtet mündet, die ihrerseits zu einem Absauggebläse bzw. zu einer Rauchgasreinigung führt.

Da es bei dem Gießen verschiedener Strangbreiten und -dicken bei verschiedenen Gießgeschwindigkeiten vorkommen kann, daß der Abstand zwischen letzter Rolle vor dem Schneidbereich und der ersten Stummelrolle 15 nicht ausreicht, können die Rahmen 14 zur Vergrößerung der ersten Schneidlücke in Stranglaufrichtung verschoben werden.

Es können auch Fälle vorkommen, bei denen Formatwechsel des Stranges 1 während des Gießens vorkommen. Eine Anpassung des Abstandes zwischen den Rahmen 14 bei laufendem Strang 1 ist durch ein Eindrehen oder Ausdrehen der sich gegenüberliegenden Rahmen 14 bei stetigem Verkleinern oder Verbreitern des Stranges 1 möglich.

Dazu wird vorgeschlagen, an einem Ende der Rahmen 14 Drehlager für ein Drehen in waagerechter Ebene und am anderen Ende Verschiebeantriebe für das Ein- oder Ausschwenken gemäß der Breitenveränderung des Stranges 1 vorzusehen. Vorzugsweise sind dazu zwischen den Verschiebesystemen 16 und den Rahmen 14 senkrechte Drehzapfen und Drehlager anzuordnen und die vorhandenen Schiebesysteme 16 und Schiebeantrieb 17 vorn oder hinten wahlweise zum Ein- bzw. Ausschwenken zu betätigen. Damit werden auch unerwünschte Verspannungen beim parallelen Verschieben und nicht absolut synchron laufenden Einzelantrieben vermieden. Natürlich sollten die Verschiebesysteme 16 möglichst nahe am vorderen und hinteren Ende der Rahmen angeordnet sein.

Für eine vorgesehene Verschiebung bzw. ein Verfahren der Rahmen in Längsrichtung sind lediglich Schiebe- oder Laufbahnen und Schlitten oder Rollen zwischen Rahmen 14 und Fundament oder zwischen Verschiebesystem 16 und Rahmen 14, und geeignete Antriebe, z. B. hydraulische Zylinder, einzufügen.

Für den Einsatz von zwei zur Erzielung kurzer Strangstücke hintereinander im Brennschneidbereich angeordneten Brennschneidmaschinen 2 oder auch aus anderen Gründen können die Rahmen 14 auch aus mehreren, einzelnen Teilstücken bestehen, oder anders ausgedrückt, können zwei kurze Stummelrollgänge gemäß vorstehender Ansprüche und Beschreibung angeordnet werden, die jeweils zu der über ihnen arbeitenden Brennschneidmaschine und der geforderten Stücklänge passend längs verschieb- oder verfahrbar sind.

Natürlich ist es durch die Aufteilung des Rollganges in unabhängige linke und rechte Hälften möglich, auch nur einen der beiden Rahmen 14 mit Stummelrollen einzeln auch längs zu verschieben oder zu verfahren, so wie das einer vielleicht unregelmäßigen Schneidaufgabe entspricht.

Da im Anfangsbereich des Brennschneidens der Strang ungeteilt sein Gewicht noch auf viele Rollgangsrollen und Stummelrollen 15 verteilt, ist es möglich, die ersten Stummelrollen 15 besonders kurz auszubilden, um ein problemloses Vorbei schneiden an den ersten Stummelrollen 15 beim Einschneiden zu ermöglichen.

Eine Reparatur der Stummelrollen 15 bei fehlerhaftem Hineinschneiden oder eine vielleicht gewünschte andere Länge der Stummelrollen 15 je nach Breite des Stranges 1 ist vorteilhaft möglich, wenn man die Stummelrollen 15 zweiteilig, nämlich an Achse 31 und aufgesteckter, hutförmiger Hülse 30 herstellt und somit die Hülse 30 leicht ausgetauscht werden kann.

Da durch die Thermik die vorwiegend unter dem Strang entstehenden Rauchgase nicht nur an den Strangseiten hochströmen, sondern sich gerade im Sinterkanal 20 auf die Gießanlage zu verbreiten, bewirkt eine Begrenzung durch Abschottungen 18 und 19 eine bessere Absaugung. Die beste Überwachung eines Brennschneidablaufes erfolgt von unten an der Schneidstrahl-Austrittseite des Stranges 1. Der Abfluß der glühenden Schlacke und der sie begleitende Funkenflug zeigen den sicheren Fortgang des Schneidens, ein stark rückwärts gerichteter Funkenflug, eine zu hohe gewählte Schneidgeschwindigkeit und ein zu stark nach vorn gerichteter Funkenflug eine zu niedrige Schneidgeschwindigkeit an. Eine Kamera 24 hinter der hinteren Abschottung 19 mit entsprechend geschützter Öffnung kann mit einem Monitor in einer Bedienkabine oder auf der Gießbühne eine gute, weil einfache Erkennungsmöglichkeit der Regelmäßigkeit des Brennschneidens geben. Die Sicht der Kamera ist durch irgendwelche Unterstützungsteile beim Stummel-Brennschneidrollgang ungestört.

### Legende

- 1: Strang
- 2: Brennschneidmaschine
- 3: Gasversorgung
- 4: Gassteuerung
- 5: Gasleitung
- 6: Schneidbrenner
- 7: Hebel
- 8: Kantentaster
- 9: Aufsetzkufe mit Brennerbrücke
- 10: Laufbahn
- 11: Laufbahnpuffer
- 12: Bramme
- 13: Rollgang
- 14: Rahmen
- 15: Stummelrolle
- 16: Verschiebesystem
- 17: Verschiebeantrieb
- 18: vordere Abschottung
- 19: hintere Abschottung
- 20: Sinterkanal
- 21: Ablaufrollgang
- 22: Stummelrollenantrieb
- 23: Abdeckplatte
- 24: Kamera
- 25: Absaugschnorchel
- 26: Absaugleitung
- 27: Klappen
- 28: Klappenhebel
- 29: Niederdrücker
- 30: Hülsen
- 31: Achse

## Patentansprüche

1. Stranggießanlage für Stahl mit einer Strangunterstützung im Brennschneidbereich für einfachen, störfreien, pflegeleichten, wartungsarmen und rauchgasfreien Betrieb, dadurch gekennzeichnet, daß zur Unterstützung des Stranges zwei seitlich angeordnete entsprechend der jeweiligen Strangbreite verstellbare oder entsprechend einer bestimmten Breite fest angeordnete Rahmen 14 mit sich gegenüberliegenden Stummelrollen 15, jeweils mit oder ohne Antrieb vorgesehen sind, die nur soweit unter den Strang 1 ragen, daß dieser sicher unterstützt ist und daß im Synchronlauf Strang1/Brennschneidmaschine 2 der Brennschnitt schon vor den ersten Stummelrollen 15 in den unterstützungsfreien Abstand zwischen gegenüberliegenden Stummeln führt und daß bei fest angeordneten Rahmen 14 die Stummelrollen 15 in den Rahmen 14 verschiebbar ausgeführt sind.

2. Stranggießanlage für Stahl Anspruch 1, dadurch gekennzeichnet, daß die seitlichen Rahmen 14 auch längsverschiebbar angeordnet und mit Stummelrollen-Antrieben 17 für ein strangsynchrones, verstellendes und schnelles Verschieben ausgerüstet sind.

3. Stranggießanlage für Stahl nach einem der Ansprüche 1 bis 2, dadurch gekennzeichnet, daß die Rahmen 14 zur Anpassung an Strangbreite und erforderliche Mitlaufwege statt waagerecht seitlich und längs verschiebbar, je nach Strangbreite und Schneidlinienverlauf, an einem Ende drehbar und am anderen mit einer Verstelleinrichtung ausgerüstet sind.

4. Stranggießanlage für Stahl nach einem der Ansprüche 1 bis 3, dadurch gekennzeichnet, daß die beiden ursprünglichen Rahmen 14 in je zwei oder drei Rahmenteile mit Einzelverschiebung, bzw. -verfahrbarkeit, bzw. -drehbarkeit, aufgeteilt sind.

5. Stranggießanlage für Stahl nach einem der Ansprüche 1 bis 4, dadurch gekennzeichnet, daß die Stummelrollen 15 in der Nähe des Brennschneidbeginnes kurz ausgeführt sind, während sie zum Ende des Brennschneidbereiches hin entsprechend dem Schneidlinienverlauf weiter unter den Strang 1 ragen.

6. Stranggießanlage für Stahl nach einem der Ansprüche 1 bis 5, dadurch gekennzeichnet, daß die Rahmen 14 als Kastenprofile mit Absaugöffnungen zwischen den Stummelrollen 15 ausgeführt und mittels beweglich angebrachten Absaugleitungen 26 mit einem Rauchgasventilator verbunden sind.

7. Stranggießanlage für Stahl nach einem der Ansprüche 1 bis 6, dadurch gekennzeichnet, daß die Rahmen 14 mit Abdeckplatten 23 zwischen den Stummelrollen 15 versehen sind, die mit diesem gleichweit und dicht unter den Strang 1 ragen.

8. Stranggießanlage für Stahl nach einem der Ansprüche 1 bis 7, dadurch gekennzeichnet, daß die Rahmen 14 mit Klappen 27 über den Absaugöffnungen versehen sind, die durch die Abdeckplatten 23-Schlitze ragenden und auf den Rahmen 14 drehbar gelagerten Klappenhebel 28 gehalten werden.

9. Stranggießanlage für Stahl nach Anspruch 8 , dadurch gekennzeichnet, daß die Klappenhebel 28 am Antriebsende Einrichtungen zum Öffnen der Klappen 27 im Zusammenhang mit dem Brennschnittfortlauf haben.

10. Stranggießanlage für Stahl nach einem der Ansprüche 8 oder 9, dadurch gekennzeichnet, daß die über dem Rahmen 14 synchron mit dem Strang 1 verfahrende Brennschneidmaschine 2 Niederdrücker 29 in Form von Rollen oder Nocken hat, die direkt auf die Antriebsenden der Klappenhebel 28 wirken oder Schaltelemente zum Ingangsetzen anderer Antriebe an den Klappenhebeln 28 betätigen.

11. Stranggießanlage für Stahl nach einem der Ansprüche 1 bis 10, dadurch gekennzeichnet, daß ein Sinter- und Schlackenkanal 20 unter dem Strang 1 am Anfang und Ende der Brennschneidstrecke mit Abschottungen 18, 19 versehen ist, die nur den Wasserdurchlauf im untersten Bereich erlauben, aber den Rauchgasstrom darüber in Längsrichtung verhindern.

12. Stranggießanlage für Stahl nach einem der Ansprüche 1 bis 11, dadurch gekennzeichnet, daß die Stummelrollen 15 aus Rollenachsen 31 bestehen, über die leicht austauschbare, verschleißfeste, rohr- oder hutartige Hülsen 30 gesteckt sind.

13. Stranggießanlage für Stahl nach einem der Ansprüche 11 bis 12, dadurch gekennzeichnet, daß in der ablaufseitigen Abschottung des Sinterkanals 20 hinter einer Sichtscheibe eine Kamera 24 angeordnet ist, mit der über einen Monitor der Schnittaustritt an der Strangunterfläche störungsfrei beobachtet werden kann.

## Claims

1. Continuous casting slab cutting installation with a slab support in the cutting area in order to guarantee a simple, trouble-free, easy-care, low-maintenance and fume-exhaust-free operation, defined by providing two laterally arranged frames (14) with or without drive with opposing stub rolls (15) for support of the slab, the frames being adjustable according to the respective slab width or being fixed according to stipulated slab widths. Those frames do only extend as much below the strand (1) to support it safely and to enable that during synchronous casting strand (1)/torch-cutting machine (2) the torch cut reaches the supportless distance between the opposing stubs already in front of the first stub rolls (15). With fixedly arranged frames (14) the stub rolls (15) in the frames (14) are designed slidably.

2. Continuous casting slab cutting installation as per claim 1 defined by that the lateral frames (14) are also arranged in a way to allow longitudinal displacement and are equipped with stub roll drives (17) for a strand-synchronous, adjustable and quick displacement.

3. Continuous casting slab cutting installation as per one of the claims 1 to 2 defined by that for adaption to strand width and required synchronized travel path, the frames (14) instead of being horizontally displaceable are designed for lateral and longitudinal displacement and are equipped, according to strand width and cutting line path, at one end rotatable and at the other end with an adjusting unit.

4. Continuous casting slab cutting installation as per one of the claims 1 to 3 defined by that the two original frames (14) are subdivided in respectively two or three frame units with single displacement respectively single travelling respectively single rotation.

5. Continuous casting slab cutting installation as per one of the claims 1 to 4 defined by that the stub rolls (15) near the starting point of the torch cutting operation are designed as short ones, whereas they do extend further below the strand (1) towards the end of the cutting area corresponding to the cutting line.

6. Continuous casting slab cutting installation as per one of the claims 1 to 5 defined by that the frames (14) are carried out as box profiles with fume-exhaustion holes between the stub rolls (15) and are connected with a fume exhaustion fan via movably arranged exhaustion pipes (26).

7. Continuous casting slab cutting installation as per one of the claims 1 to 6 defined by that the frames (14) are equipped with cover plates (23) between the stub rolls (15), which extend as wide and dense below the strand (1) as the stub rolls (15).

8. Continuous casting slab cutting installation as per one of the claims 1 to 7 defined by that the frames (14) are provided with lids (27) above the fume exhaustion holes, which are held by levers (28) in rotatable bearings positioned on the frames (14), those levers (28) extending through the cover plate (23) gaps.

9. Continuous casting slab cutting installation as per one of the claims 1 to 8 defined by that the levers (28) are equipped with devices for opening the lids (27) at the drive ends in correspondance with the progress of the oxy-cut.

10. Continuous casting slab cutting installation as per one of the claims 8 or 9 defined by that the oxygen cutting machine (2) which travels synchronously with the strand (1) above the frame (14), disposes of down-holding clamps (29) designed as rolls or cams, which have a direct effect on the levers (28) at the drive ends or which do set in motion switch elements for initiating other drives at the levers (28).

11. Continuous casting slab cutting installation as per one of the claims 1 to 10 defined by that a scale and slag flue (20) below the strand (1) is equipped with screens (18, 19) at the beginning and the end of the oxygen cutting line, which do only enable the water flow in the lowest area but prevent any fume-exhaust flow above in longitudinal direction.

12. Continuous casting slab cutting installation as per one of the claims 1 to 11 defined by that the stub rolls (15) consist of roller axes (31), above which are put easily interchangeable, wear-resistant, pipe- or hat-like sleeves (30).

13. Continuous casting slab cutting installation as per one of the claims 11 to 12 defined by that on the downstream side of the screen of the scale flue (20) a camera (24) is arranged behind a protective screen, with which it is possible to observe the cut exit at the strand's lower surface on a monitor without any disturbances.

## Revendications

1. Installation de coulée continue pour acier avec support de coulée au niveau de l'oxycoupage propre à une exploitation simple, fiable, sans fumées et facile d'entretien et de maintenance, caractérisée en ce que le support de la coulée est réalisé par deux cadres (14) disposés de part et d'autre de la coulée (1), ces cadres sont soit ajustables selon la largeur de coulée désirée, soit fixés pour une largeur de coulée non modifiable, et sont pourvus de semi-rouleaux de rive en regard les uns des autres, motorisés ou non, qui se prolongent sous la coulée (1) juste de quoi la soutenir efficacement permettant ainsi lors du parcours solidaire de la coulée (1) et de la machine d'oxycoupage (2) que le jet de coupe atteigne avant la rencontre des premiers semi-rouleaux (15) la zone non-supportée entre les semi-rouleaux en regard qui dans le cas d'un cadre (14) fixe sont translatables.

2. Installation de coulée continue pour acier selon la revendication 1, caractérisée en ce que les cadres latéraux (14) sont aussi translatables suivant l'axe de la coulée et qu'ils sont équipés de moteurs de semi-rouleau (17) pour une translation rapide, adaptable et solidaire de la coulée.

3. Installation de coulée continue pour acier selon l'une des revendications 1 à 2, caractérisée en ce que, au lieu d'être translatables horizontalement en largeur et suivant l'axe de la coulée pour s'adapter au format de coulée et à la course solidaire de la machine, les cadres (14) sont, selon la largeur de coulée et la ligne de coupe, basculables d'un côté et équipés d'un dispositif de réglage de l'autre.

4. Installation de coulée continue pour acier selon l'une des revendications 1 à 3, caractérisée en ce que les deux cadres (14) d'origine sont répartis chacun en deux ou trois tronçons chacun ayant son dispositif individuel de translation latérale ou longitudinale, respectivement de pivot.

5. Installation de coulée continue pour acier selon l'une des revendications 1 à 4, caractérisée en ce que les semi-rouleaux (15) situés à proximité du départ de coupe sont plus courts tandis que ceux jusqu'à la fin du domaine de coupe se prolongent selon la ligne de coupe plus loin sous la coulée (1).

6. Installation de coulée continue pour acier selon l'une des revendications 1 à 5, caractérisée en ce que les cadres (14) sont conçus sans forme de caissons profilés avec des fenêtres d'aspiration entre les semi-rouleaux (15), lesquelles fenêtres sont reliées à une ventilation à fumées via des conduites souples d'aspiration.

7. Installation de coulée continue pour acier selon l'une des revendications 1 à 6, caractérisée en ce que les cadres (14) sont pourvus entre les semi-rouleaux (15) de capots qui se prolongent horizontalement juste en dessous de la coulée.

8. Installation de coulée continue pour acier selon l'une des revendications 1 à 7, caractérisée en ce que les cadres (14) sont équipés de volets (27) qui sont tenus par une fente dans les capots (23) et un levier de volet (28) placé dans un palier sur le cadre (14).

9. Installation de coulée continue pour acier selon la revendications 8, caractérisée en ce que les leviers de volet (28) possèdent, du côté des moteurs, des dispositifs d'ouverture, respectivement de fermeture des volets en fonction du déroulement de l'oxycoupage.

10. Installation de coulée continue pour acier selon l'une des revendications 7, 8 ou 9, caractérisée en ce que la machine d'oxycoupage (2) se déplacant solidairement avec la coulée (1) au desous des cadres (14) est équipée de butées sous forme de rouleaux ou de cames qui agissent directement sur les leviers de volet (28) coté moteurs ou qui commandent des dispositifs de détection pour la mise en action d'autres moteurs pilotant les leviers (28).

11. Installation de coulée continue pour acier selon l'une des revendications 1 à 10, caractérisée en ce qu'un canal à déjections (20) sous la coulée (1) est équipé aux extrémités du domaine d'oxycoupage de cloisons (18), (19) qui n'autorisent l'écoulement de l'eau que dans la partie inférieure et qui par contre interdisent que les fumées s'échappent dans la direction parallèle à la coulée.

12. Installation de coulée continue pour acier selon l'une des revendications 1 à 11, caractérisée en ce que les semi-rouleaux de rive (15) se composent d'axes de rouleau (31), sur lesquels viennent se positionner des manchons en forme de tube ou de capot résistant à l'usure et facilement remplaçables.

13. Installation de coulée continue pour acier selon l'une des revendications 11 à 12, caractérisée en ce qu'une caméra (24) disposée derrière une vitre d'observation dans la cloison avale du canal de déjection permet d'observer sans problème par le biais d'un moniteur la face inférieure de la brame et le déroulement de la coupe par en dessous.
